# EUROPEAN PATENT SPECIFICATION

(11) **EP 4 532 571 B1**
(45) Date of publication and mention of the grant of the patent: **24.06.2026**
(21) Application number: 23734048.4
(22) Date of filing: 30.05.2023
(51) Int. Cl.: C08F 214/26, C08K 5/00, C08K 5/315, C08K 5/50, C08L 27/18, C08F 216/14

(54) **CURABLE FLUOROPOLYMER COMPOSITIONS COMPRISING A CATALYST AND A BIS PHTHALONITRILE-CONTAINING COMPOUND AND CURED ARTICLES THEREFROM**
HÄRTBARE FLUOROPOLYMERZUSAMMENSETZUNGEN, DIE EINEN KATALYSATOR UND EINE BISPHTHALONITRILVERBINDUNG ENTHALTEN, UND GEHÄRTETE ARTIKEL DARAUS
COMPOSITIONS DE FLUOROPOLYMÈRE DURCISSABLE COMPRENANT UN CATALYSEUR ET UN COMPOSÉ CONTENANT DU BIS PHTHALONITRILE ET ARTICLES DURCIS À PARTIR DE CELLES-CI

(30) Priority: 31.05.2022 US 202263347145 P
(43) Date of publication of application: 09.04.2025
(73) Proprietor: 3M Innovative Properties Company, Saint Paul, Minnesota 55133-3427 (US)
(72) Inventor: MITCHELL, Michael H., Saint Paul, Minnesota 55133-3427 (US); ANDERSON, Benjamin J., Saint Paul, Minnesota 55133-3427 (US); FUKUSHI, Tatsuo, Saint Paul, Minnesota 55133-3427 (US); MCBRIDE, Justin P., Saint Paul, Minnesota 55133-3427 (US); SUZUKI, Yuta, Tokyo 141--8684 (JP)
(74) Representative: Mathys & Squire
(86) International application number: PCT/IB2023/055532
(87) International publication number: WO 2023/233293

(56) References cited:
- EP-A1- 2 070 982
- WO-A1-2020/245683
- WO-A2-2010/151610

## Description

### TECHNICAL FIELD

WO 2010/151610 A2 describes a catalyst composition comprising a cation and an anion of the following formula:

Aₙ ^{q-} Qₚ ^{m+},

wherein m, n, p, and q are positive integers, wherein m * p = n * q, wherein Q^{m+} is an organo onium, and A^{q-} is an anion, provided that at least one A^{q-} is selected from the following formula 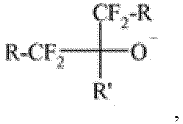 wherein each R independently is H, halo, alkyl, aryl, aralkyl, or cycloalkyl, and which also may be halogenated, fluorinated, or perfluorinated, wherein two or more of R and R groups may together form a ring, wherein each R group independently may contain one or more heteroatom(s), wherein R' can be the same as R, with the proviso that R' cannot be halo, wherein the catalyst composition is essentially free of hydrocarbon containing alcohol. Also disclosed are a fluoropolymer composition including this curartive, a method of making a fluoropolymer, and fluoropolymer articles containing curable or cured fluoropolymer compositions.

The present disclosure relates to curable fluoroelastomer compositions containing compounds having an organo onium catalyst and an additive comprising two phthalonitrile groups. The use of such compounds to cure amorphous fluoropolymers containing nitrile cure site groups and cured compositions are also described.

### SUMMARY

Compression set resistance is the ability of a material to return to its original thickness after being compressed under a load at a given temperature for a period of time. When compression set resistance is tested on highly fluorinated elastomers at elevated temperatures, the temperature is typically 275°C or even 300°C. However, in some applications, the fluoroelastomers are being used in extreme temperature conditions (e.g., at least 325, 330, or even 335°C). Thus, there is need to identify compositions which exhibit good compression set when subject to extreme temperatures.

In one aspect, a composition is described comprising (i) an uncured highly fluorinated amorphous polymer comprising nitrile groups, wherein at least 80 % of the hydrogen atoms of the polymer backbone of the highly fluorinated amorphous polymer have been replaced with fluorine atoms, (ii) a catalyst comprising an organo onium cation and an anion of Formula I: 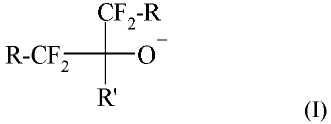 wherein each R and R' is independently is H, halo, alkyl, aryl, aralkyl, or cycloalkyl, and which also may be halogenated, fluorinated, or perfluorinated, optionally wherein each R or R' group independently may contain one or more heteroatom(s); wherein two or more of R and R' groups may together form a ring with the proviso that R' cannot be halo; and
(iii) an additive according to Formula II 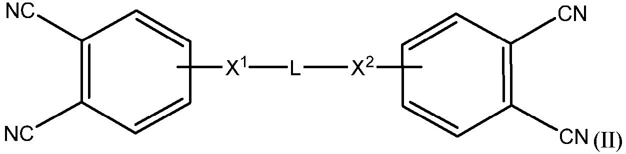 wherein X¹ and X² are independently selected from O or S, and L comprises at least one multivalent six-membered arene group.

In another aspect, an article is described. The article comprising a cured elastomer derived from a composition is described comprising (i) an uncured highly fluorinated amorphous polymer comprising nitrile groups, wherein at least 80 % of the hydrogen atoms of the polymer backbone of the highly fluorinated amorphous polymer have been replaced with fluorine atoms, (ii) a catalyst comprising an organo onium cation and an anion of Formula I: 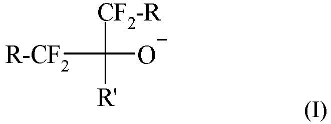 wherein each R and R' is independently is H, halo, alkyl, aryl, aralkyl, or cycloalkyl, and which also may be halogenated, fluorinated, or perfluorinated, optionally wherein each R or R' group independently may contain one or more heteroatom(s); wherein two or more of R and R' groups may together form a ring with the proviso that R' cannot be halo; and (iii) an additive according to Formula II 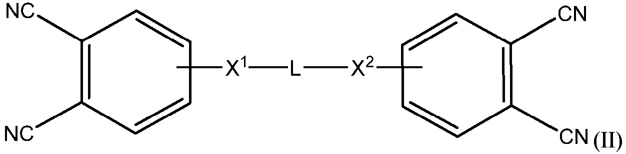 wherein X¹ and X² are independently selected from O or S, and L comprises at least one multivalent six-membered arene group.

In yet another aspect, the use of a catalyst comprising an organo onium cation and an anion of Formula I: 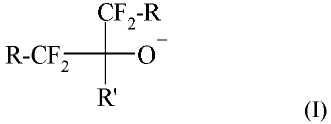 wherein each R and R' is independently is H, halo, alkyl, aryl, aralkyl, or cycloalkyl, and which also may be halogenated, fluorinated, or perfluorinated, optionally wherein each R or R' group independently may contain one or more heteroatom(s); wherein two or more of R and R' groups may together form a ring with the proviso that R' cannot be halo; and an additive according to Formula II 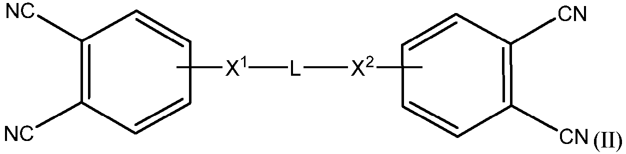 wherein X¹ and X² are independently selected from O or S, and L comprises at least one multivalent six-membered arene group to cure an uncured highly fluorinated amorphous polymer comprising nitrile groups, wherein at least 80 % of the hydrogen atoms of the polymer backbone of the highly fluorinated amorphous polymer have been replaced with fluorine atoms is described.

The above summary is not intended to describe each embodiment. The details of one or more embodiments of the invention are also set forth in the description below. Other features, objects, and advantages will be apparent from the description and from the claims.

### DETAILED DESCRIPTION

As used herein, the term
"a", "an", and "the" are used interchangeably and mean one or more; and
"and/or" is used to indicate one or both stated cases may occur, for example A and/or B includes, (A and B) and (A or B);
"backbone" refers to the main continuous chain of the polymer;
"crosslinking" refers to connecting two pre-formed polymer chains using chemical bonds or chemical groups;
"cure site" refers to functional groups, which may participate in crosslinking;
"interpolymerized" refers to monomers that are polymerized together to form a polymer backbone;
"monomer" is a molecule which can undergo polymerization which then form part of the essential structure of a polymer;
"perfluorinated" means a group or a compound derived from a hydrocarbon wherein all hydrogen atoms have been replaced by fluorine atoms. A perfluorinated compound may however still contain other atoms than fluorine and carbon atoms, like oxygen atoms, chlorine atoms, bromine atoms and iodine atoms; and
"polymer" refers to a macrostructure having a number average molecular weight (Mn) of at least 30,000 dalton, at least 50,000 dalton, at least 100,000 dalton, at least 300,000 dalton, at least 500,000 dalton, at least, 750,000 dalton, at least 1,000,000 dalton, or even at least 1,500,000 dalton and not such a high molecular weight as to cause premature gelling of the polymer.

As used here, and known in the art, the horizontal line intersecting the benzene ring as shown in this structure 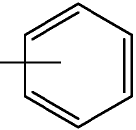 represents a bond that is attached to any one of the vertices of the ring.

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

As used herein, "comprises at least one of" A, B, and C refers to element A by itself, element B by itself, element C by itself, A and B, A and C, B and C, and a combination of all three.

The present disclosure is directed toward the use of a bis phthalonitrile-containing compound and an organo onium catalyst to cure highly fluorinated amorphous fluoropolymers comprising nitrile cure sites. It has been discovered that the resulting cured highly fluorinated elastomers have good high temperature properties.

### Fluoropolymer

As used herein, a "highly fluorinated" polymer is one in which at least 80 %, e.g., at least 90 or even at least 95 % of the hydrogen atoms of the polymer backbone have been replaced with fluorine atoms. In some embodiments, 0 to 20 %, e.g., 5 to 15 % of the hydrogen atoms of the polymer backbone may be replaced with chlorine atoms. In some embodiments, these highly fluorinated polymers may include one or more hydrogen-containing end groups or pendant groups, which are not considered to be part of the polymer backbone.

In some embodiments, the highly fluorinated fluoropolymer is a copolymer of tetrafluoroethylene (TFE) and one or more perfluorinated comonomers. In some embodiments, at least one perfluorinated comonomer is a perfluoroalkylvinyl ether (PAVE), including perfluoroalkyl alkoxy vinyl ethers. Suitable PAVEs include perfluoromethyl vinyl ether (PMVE), perfluoroethyl vinyl ether (PEVE), and perfluoropropyl vinyl ether (PPVE-1 and PPVE-2). In some embodiments, at least one perfluorinated comonomer is a perfluoroalkyl allyl ether (PAAE), including perfluoroalkyl alkoxy allyl ethers. Suitable PAAEs include perfluoromethyl allyl ether (MA-1), perfluoroethyl allyl ether (MA-2), and perfluoropropyl allyl ether (MA-3).

In some embodiments, at least one perfluorinated comonomer is a perfluorinated alphaolefin other than TFE, such as hexafluoropropylene (HFP). Additional optional comonomers include partially fluorinated alpha olefins (e.g., CH₂=CF₂, VDF); F and Cl containing olefins such as chlorotrifluoroethylene; and non-fluorinated alpha olefins such as ethylene or propylene.

In some embodiments, the fluoropolymer is perfluorinated, i.e., at least 99 % or even 100 % of the hydrogen atoms of the polymer backbone have been replaced with fluorine or chlorine atoms, preferably fluorine atoms. If chlorine atoms are present, they comprise no greater than 20 %, e.g., no greater than 10 % based on the total moles of fluorine and chlorine atoms on the polymer backbone. In some embodiments, the perfluorinated polymer comprises no greater than 5 %, e.g., no greater than 1 %, or even no greater than 0.01 % chlorine atoms based on the total of fluorine and chlorine atoms on the polymer backbone.

Generally, the highly fluorinated fluoropolymer contains a sufficient number of nitrile groups (C≡N) to achieve the desired degree of cure (i.e., crosslinking). In some embodiments, the fluoropolymer contains at least 0.1 mole % of nitrile groups, e.g., at least 0.5 or even at least 1 mole % of nitrile groups. In some embodiments, the fluoropolymer contains no greater than 5, e.g., no greater than 2 or even no greater than 1.5 mole % of nitrile groups.

In some embodiments, the nitrile groups are introduced by copolymerizing a nitrile-group containing cure site monomer with the other comonomer, e.g., the TFE, PAVE, and PAAE comonomers. Examples of nitrile containing cure site monomers correspond to the following formulae: CF₂=CF-CF₂-O-Rf-CN; CF₂=CFO(CF₂)ᵣCN; CF₂=CF[OCF₂CF(CF₃)]ₖO(CF₂)ᵤCN; and CF₂=CFO[CF₂CF(CF₃)O]ₚ(CF₂)ᵥOCF(CF₃)CN wherein, r represents an integer of 2 to 12; p represents an integer of 0 to 4; k represents 1 or 2; v represents an integer of 0 to 6; u represents an integer of 1 to 6; and Rf is a perfluoroalkylene or a bivalent perfluoroether group. Specific examples of nitrile containing fluorinated monomers include, but are not limited to, CF₂=CFOCF₂CF(CF₃)OCF₂CF₂CN, CF₂=CFOCF₂(CF2)3CF₂CN, and CF₂=CFOCF₂(CF₂)₃CF(CF₃)CN.

If the amorphous fluoropolymer is perfluorinated, typically at least 50 mole percent (mol %) of its interpolymerized units are derived from TFE, optionally including HFP. The balance of the interpolymerized units of the amorphous fluoropolymer (e.g., 10 to 50 mol %) is made up of one or more perfluorinated vinyl ethers or perfluorinated allyl ethers as described above in any of their embodiments and a cure site monomer as described above in any of its embodiments. In some embodiments, the molar ratio of units derived from TFE comonomer units to comonomer units derived from the perfluorinated vinyl ethers or perfluorinated allyl ethers described above may be, for example, from 1 : 1 to 4 : 1, wherein the unsaturated ethers may be used as single compounds or as combinations of two or more of the unsaturated ethers. Typical compositions comprise from 44-62 wt.% TFE and 38-56 wt.% PMVE and from 0.1-10 wt.% cure site monomer and from 0-10 wt.% of other comonomers or modifiers with the amount of ingredients being selected such that the total amount is 100 wt.%.

If the amorphous fluoropolymer is not perfluorinated, it typically contains from about 5 mol % to about 90 mol % of its interpolymerized units derived from TFE, CTFE, and/or HFP; from about 5 mol % to about 90 mol % of its interpolymerized units derived from VDF, ethylene, and/or propylene; up to about 40 mol % of its interpolymerized units derived from a perfluorinated vinyl ether or perfluorinated allyl ether as described above in any their embodiments; and from about 0.1 mol % to about 5 mol %, in some embodiments from about 0.3 mol % to about 2 mol %, of a cure site monomer. Some typical compositions comprise from about 22-30 wt.% TFE, 30-38 wt.% VDF, 34-42 wt.% HFP and from 0.1 -10 wt.% cure site monomer and from 0-10 wt.% of other comonomers or modifiers with the amount of ingredients being selected such that the total amount is 100 wt.%.

Examples of amorphous perfluoropolymers that may be useful in the present disclosure include a TFE/perfluoromethyl vinyl ether (PMVE) copolymer, TFE/perfluoromethyl allyl ether (PMAE) copolymer, a TFE/CF₂=CFOC₃F₇ copolymer, a TFE/CF₂=CFCF₂OC₃F₇ copolymer, a TFE/CF₂=CFOCF₃/CF₂=CFOC₃F₇ copolymer, TFE/CF₂=CFCF₂OCF₃/CF₂=CFCF₂OC₃F₇ copolymer, and a TFE/ HFP copolymer. In some embodiments, amorphous fluoropolymers that may be useful in the present disclosure include a TFE/propylene copolymer, a TFE/propylene/VDF copolymer, a VDF/HFP copolymer, a TFE/VDF/HFP copolymer, a TFE/ethyl vinyl ether (EVE) copolymer, a TFE/butyl vinyl ether (BVE) copolymer, a TFE/EVE/BVE copolymer, a VDF/CF₂=CFOC₃F₇ copolymer, an ethylene/HFP copolymer, a CTFE/VDF copolymer, a TFE/VDF copolymer, a TFE/VDF/PMVE/ethylene copolymer, and a TFE/VDF/CF₂=CFO(CF₂)₃OCF₃ copolymer. Each of the aforementioned copolymers would contain a monomeric unit having a cure site.

### Organo onium catalyst

The catalyst of the present disclosure includes an organo onium cation and an anion represented by Formula I:

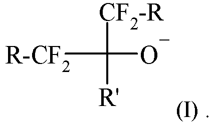

In Formula I, each R and R' is independently hydrogen, halogen (i.e., -F, -Cl, -Br, or -I), alkyl, aryl, arylalkylenyl, or alkylarylenyl, wherein the alkyl, aryl, arylalkylenyl, or alkylarylenyl each may be unsubstituted or each may be substituted by one or more halogens, with the proviso that R' is not halogen. In some embodiments, any two of the R and R' groups can join together to form a ring. For example, any two of the R and R' groups can join together to form a divalent alkylene (e.g., ethylene, propylene, or butylene), arylene, alkylarylene, or arylalkylene group wherein a portion of the carbon atoms may be substituted by heteroatoms selected from N, O and S.

In some embodiments, each R is independently hydrogen, halogen (i.e., -F, -Cl, -Br, or -I), alkyl having up to 12 carbon atoms (e.g., methyl, ethyl, hexyl, isooctyl, isopropyl, cyclohexyl, norbornyl, and [2.2.2]bicyclooctyl), C₆-C₁₄ aryl (e.g., phenyl, naphthyl, biphenylyl, pyridinyl, pyrazinyl, and phenanthryl), C₇-C₁₈ alkylarylenyl (e.g., toluyl, isodecylphenyl, and isopropylphenyl), C₇-C₁₈ arylalkylenyl (e.g., phenylmethyl, phenethyl, and phenylpropyl), C₂-C₁₂ alkoxyalkyl (e.g., methoxymethyl, methoxypropyl) and alkoxyalkoxylalkyl (e.g., methoxymethoxymethyl, ethoxyethoxyethyl, and methoxyethoxyethyl), and partially or perfluorinated derivatives of any of the foregoing. In some embodiments, each R is -F.

In some embodiments, R' is independently alkyl having up to 12 carbon atoms (e.g., methyl, ethyl, hexyl, isooctyl, isopropyl, cyclohexyl, norbornyl, and [2.2.2]bicyclooctyl), C₆-C₁₄ aryl (e.g., phenyl, naphthyl, biphenylyl, pyridinyl, pyrazinyl, and phenanthryl), C₇-C₁₈ alkylarylenyl (e.g., toluyl, isodecylphenyl, and isopropylphenyl), C₇-C₁₈ arylalkylenyl (e.g., phenylmethyl, phenethyl, and phenylpropyl), C₂-C₁₂ alkoxyalkyl (e.g., methoxymethyl, methoxypropyl) and alkoxyalkoxylalkyl (e.g., methoxymethoxymethyl, ethoxyethoxyethyl, and methoxyethoxyethyl), and partially or perfluorinated derivatives of any of the foregoing. In some embodiments, R' is independently perfluoroalkyl having up to 12, 11, 10, 9, 8, 7, 6, 5, 4, 3, or 2 carbon atoms. In some embodiments, R' is other than perfluoroalkyl having up to 12, 11, 10, 9, 8, 7, 6, 5, 4, 3, or 2 carbon atoms. In some embodiments, R' is hydrogen, phenyl, methoxyphenyl, toluyl, fluorophenyl, trifluoromethylphenyl, or trifluoromethyl. In some embodiments, R' is not trifluoromethyl. In some embodiments, R' is toluyl.

Organo onium cations that are useful in the catayst include sulfonium, phosphonium, and ammonium cations. The organo onium cation can be a trihydrocarbylsulfonium, a tetrahydrocarbylphosphonium or a tetrahydrocarbylammonium cation. Useful hydrocarbyl groups include alkyl, aryl, arylalkylenyl, and alkylarylenyl groups, each of which may be unsubstituted or substituted by at least one of halogen, alkoxy, (di)alkylamino, hydroxyl groups. The organo onium cation can be a trialkylsulfonium, a tetraalkylphosphonium or a tetraalkylammonium cation. In the trialkylsulfonium, tetralkylphosphonium, or tetraalkylammonium cation, each alkyl independently has up to 12 carbon atoms. In some embodiments, each alkyl independently has up to 11, 10, 9, 8, 7, 6, 5, 4, 3, or 2 carbon atoms. Examples of useful organoonium cations include tributylbenzylammonium, tetrabutylammonium, dibutyldiphenylammonium, triphenylbenzylphosphonium, tetrabutylphosphonium, and tributylallylphosphonium, tributyl-2-methoxypropylphosphonium, triphenylsulfonium, tritolylsulfonium, benzyl tris(dimethylamino)phosphonium, and benzyl(diethylamino)diphenylphosphonium. In some embodiments, the cation is a tetramethylammonium or a tetrabutylphosphonium. In some embodiments, the cation is tetrabutylphosphonium.

In some embodiments, the catalyst useful in the composition of the present disclosure is other than tetramethylammonium perfluoro-tert-butoxide and tetrabutylphosphonium perfluoro-tert-butoxide. In some embodiments, the catalyst useful in the composition of the present disclosure includes tetrabutylphosphonium 2-p-toluyl-1,1,1,3,3,3-hexafluoroisopropanoate. The organo onium catalyst composition can be prepared using methods known in the art, for examples, methods as disclosed in U.S. Pat. No. 8,906,821 (Grootaert et al.).

Exemplary catalysts include: tetra-alkylammonium 2-phenyl-1,1,1,3,3,3 hexafluoroisopropanolate, tetra-alkylammonium 1,1,1,3,3,3 hexafluoroisopropanolate, tetrabutylphosphonium 2-phenyl-1,1,1,3,3,3 hexafluoroisopropanolate, tetrabutylphosphonium 1,1,1,3,3,3 hexafluoroisopropanolate, tetrabutylphosphonium 2-methoxyphenyl-1,1,1,3,3,3 hexafluoroisopropanolate, or tetrabutylphosphonium 2-p-toluyl-1,1,1,3,3,3 hexafluoroisopropanolate.

### Bis phthalonitrile-containing compound

The bis phthalonitrile-containing compounds of the present disclosure are according to Formula II: 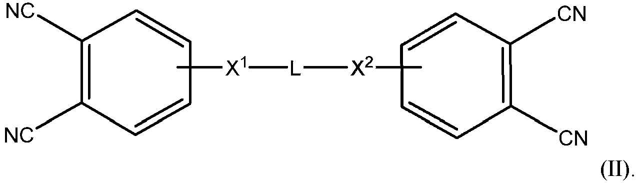 wherein X¹ and X² are independently selected from O or S, and L comprises at least one multivalent arene group. In Formula (II), the X¹-L-X² group is bonded ortho or meta to one of the nitrile (-C≡N) groups. L is a multivalent linking group which comprises at least one multivalent arene group. L may comprise one or more six-membered arene groups. In one embodiment, L comprises a multivalent fused polyring moiety. The multivalent linking group, L, may be a divalent, trivalent, or tetravalent.

In one embodiment, L is 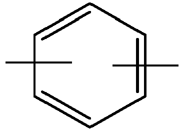 where the two horizontal lines represent (i) a bond between one vertex of the 6-membered arene ring and X¹ and (ii) a bond between a different vertex of the arene ring and X². These two bonds may be ortho, meta, or para to each other. In addition to the two bonds between the arene ring and X¹, and the arene ring and X², there may be other non-functional groups bonded to the arene group, which do not cause steric hindrance, such as at least one methyl, methoxy, ethyl, and/or ethoxy group.

In one embodiment, L is a phenylene or substituted phenylene. For example, in one embodiment, L is 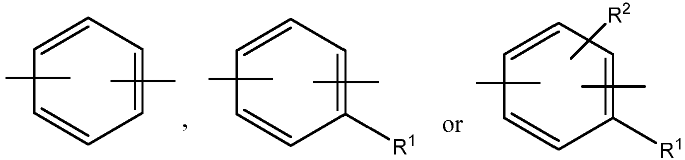 where the two horizontal lines in each structure represent (i) a bond between one vertex of the aromatic ring and X¹ and (ii) a bond between a different vertex of the aromatic ring and X². These two bonds may be ortho, meta, or para to each other. In addition to these two bonds, there may be other non-functional groups bonded to the aromatic ring, such as shown by R¹ and R² above, which do not cause steric hindrance, such non-functional groups include short chain (e.g., C1-C4) alkyl and alkoxy groups. Exemplary R¹ and R² groups include: methyl, methoxy, ethyl, and ethoxy groups.

In another embodiment, L comprises more than one aromatic group, such as naphthalene, anthracenes, phenantherene, or a divalent group of the following structure: 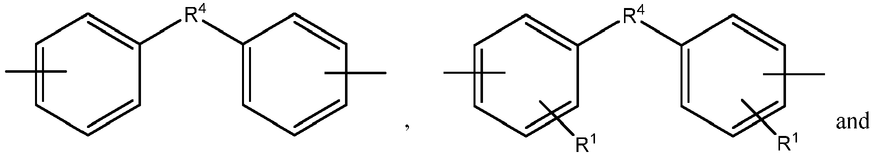 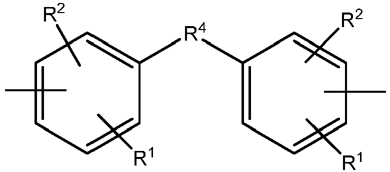 where R⁴ is selected from the group consisting of a bond, -S-, -O-, -C(CF₃)₂-, -C(CH₃)₂-, -CH₂-, - SO₂-, -C(=O)-, and -C(CH₃)₂-C₆H₄-C(CH₃)₂-. In the above structure for L, the bonds linking L to X¹ and X² of the bis phthalonitrile-containing compound can be in any position with respect to the R⁴ group. For example, the bonds to X¹ and X² can independently be ortho, meta, or para to the R⁴ group. More preferably, the bonds to X¹ and X² are either both ortho, both meta, or both para with respect to the R⁴ group. In addition to the two bonds between the phenylene and X¹, and the phenylene and R⁴, there may be other non-functional groups bonded to the phenylene, which do not cause steric hindrance, such as at least one methyl, methoxy, ethyl, and/or ethoxy group. Exemplary R¹ and R² groups include: methyl, methoxy, ethyl, and ethoxy groups.

In one embodiment, L comprises fused poly aryl rings, such as naphthalene, anthracene, phenanthrene, or chrysene.

Exemplary compounds of Formula (II) include:

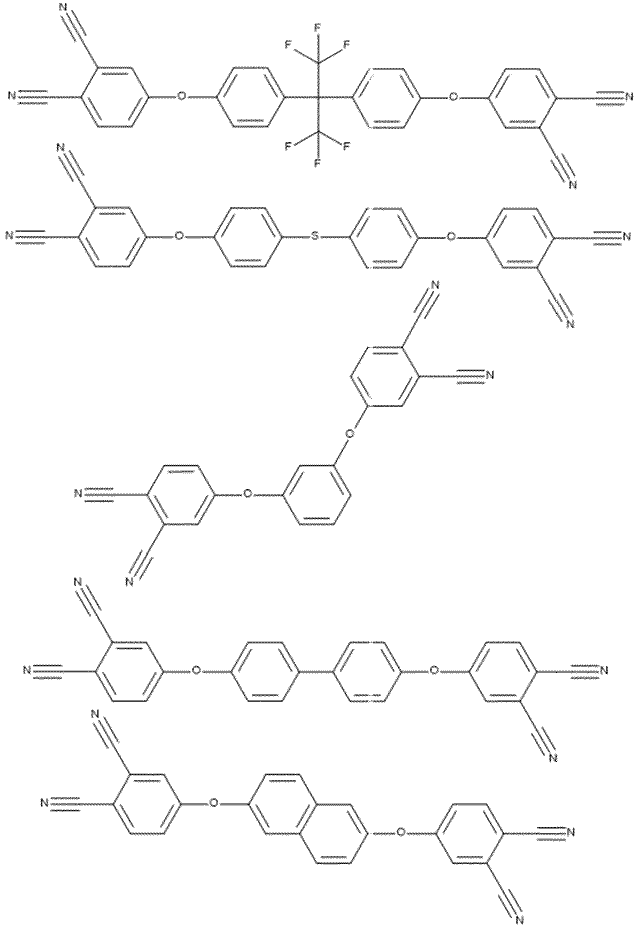

### Curable Composition

The organo onium catalyst according to formula (I) and the bis phthalonitrile-containing compound of Formula (II) can be used to cure highly fluorinated, nitrile-group containing amorphous fluoropolymers.

In one embodiment, at least 0.05, 0.1 or even 1 part by weight; and at most 2, 4, 6, or even 10 parts by weight of the organo onium catalyst is used per 100 grams of amorphous highly fluorinated polymer. In one embodiment, at least 0.05, 0.1 or even 1 part by weight; and at most 2, 2.5, 3, 4, 5, 6, 8 or even 10 parts by weight of amount of the bis phthalonitrile-containing compound according to Formula (II) is used per 100 grams of amorphous highly fluorinated polymer.

In some embodiments, the curable compositions comprising the highly fluorinated, nitrile-group containing amorphous fluoropolymer, the organo onium catalyst according to formula (I) and the bis phthalonitrile-containing compound of Formula (II) can also contain a wide variety of additives of the type normally used in the preparation of elastomeric compositions, such as acid acceptors, process aides, pigments, fillers, pore-forming agents, and those known in the art.

Such fillers include: an organic or inorganic filler such as clay, silica (SiO₂), alumina, iron red, talc, diatomaceous earth, barium sulfate, wollastonite (CaSiO₃), calcium carbonate (CaCO₃), calcium fluoride, titanium oxide, iron oxide and carbon black fillers, a polytetrafluoroethylene powder, PFA (TFE/perfluorovinyl ether copolymer) powder, an electrically conductive filler, a heat-dissipating filler, and the like may be added as an optional component to the composition. Those skilled in the art are capable of selecting specific fillers at required amounts to achieve desired physical characteristics in the vulcanized compound. The filler components may result in a compound that is capable of retaining a preferred elasticity and physical tensile, as indicated by an elongation and tensile strength value, while retaining desired properties such as retraction at lower temperature (TR-10).

In one embodiment, the composition comprises less than 50, 40, 30, 20, 15, or even 10% by weight of the inorganic filler.

Conventional adjuvants may also be incorporated into the composition of the present disclosure to enhance the properties of the resulting composition. For example, acid acceptors may be employed to facilitate the cure and thermal stability of the compound. Suitable acid acceptors may include magnesium oxide, lead oxide, calcium oxide, calcium hydroxide, dibasic lead phosphite, zinc oxide, barium carbonate, strontium hydroxide, calcium carbonate, hydrotalcite, alkali stearates, magnesium oxalate, or combinations thereof. The acid acceptors are preferably used in amounts ranging from about 1 to about 20 parts per 100 parts by weight of the polymer.

Generally, the organo onium catalyst, the bis phthalonitrile-containing compound, and optional additives can be blended with the highly fluorinated amorphous fluoropolymer and formed into articles such as sheets and O-rings using commonly known equipment and methods. For example, the compounded composition can be press cured at temperatures of at least 175 °C, e.g., at least 185 °C. In some embodiments, the press curing temperature is no greater than 225 °C, or even no greater than 200 °C. The extent of cure can be determined according to the cure rheology test described in the Examples. The press cure time is selected to achieve a desired level of cure, which can be indicated by the Tan δ at M_{H}. Generally, adequate cure is indicated by a Tan δ at M_{H} of no greater than 0.5, e.g., no greater than 0.2, or even no greater than 0.1, as determined according to the cure rheology test described below. For most applications, t'90 (as determined according to the cure rheology test) should be less than 20 minutes, for example no greater than 10 minutes. To minimize the risk of scorching, t'90 should be at least 2 minutes. In some embodiments, longer cure times, e.g., a t'90 value of at least 4 minutes may be beneficial.

Ideally, the molded mixture or press-cured article is post-cured (e.g., in an oven) at a temperature and for a time sufficient to complete the curing. Post curing is usually between about 150 °C and about 300°C, typically at about 230 °C, for a period of from about 2 hours to 50 hours or more, generally increasing with the cross-sectional thickness of the article. For thick sections, the temperature during the post cure is usually raised gradually from the lower limit of the range to the desired maximum temperature. The maximum temperature used is typically about 300 °C, and this temperature is held for about 4 hours or more. The post-cure step generally completes the cross-linking and may also release residual volatiles from the cured compositions. In one embodiment, the post-cure involves exposing molded parts to non-isothermic heat cycle. For example, the temperature is increased from room temperature to 150°C over 2 hours with a 7 hour hold at 150°C followed by a ramp to 300° C over 2 hours with a hold at 300°C for 2 hours. Finally, the part was ramped to 320°C over 15 min with a hold for 15 min before returning to ambient temperature (e.g., by shutting off the oven heat). Another example of a suitable post-cure cycle involves exposing molded parts to heat under nitrogen using six stages of conditions. First, the temperature is increased from 25 °C to 200 °C over 6 hours, then the parts are held at 200 °C for 16 hours, after which the temperature is increased from 200 °C to 250 °C over 2 hours. Then the parts are held at 250 °C for 8 hours, after which the temperature is increased from 250 °C to 300 °C over 2 hours. Then the parts are held at 300 °C for 16 hours. Finally, the parts are returned to ambient temperature such as by shutting off the oven heat.

In some applications, for examples, O-rings and seals, the compression set is a critical property. In some embodiments, the cured compositions of the present disclosure have improved compression set, especially at higher temperatures, e.g., at 300, 325, 335, or even 350 °C. In some embodiments, the cured compositions have a compression set of no greater than 60, 55, 50, 40, 35, 30, or even 25% after 70 hours at 300 °C, as measured in accordance with ASTM D 395-03 Method B and ASTM D 1414-94 with an initial deflection of 25 percent. In some embodiments, the cured compositions have a compression set of no greater than 80, 70, 60, 55, 50, or even 45%, after 70 hours at 335 °C, as measured in accordance with ASTM D 395-03 Method B and ASTM D 1414-94 with an initial deflection of 25 percent. In some embodiments, the compositions of the present disclosure maintain article integrity upon exposure to high temperatures, for example, the cured article does not melt. Although not wanting to be limited by theory, it is believed that the presence of the additive according to Formula II aids in maintaining the crosslinks of the cured article upon exposure to high temperatures.

### EXAMPLES

Unless otherwise noted, all parts, percentages, ratios, etc. in the examples and the rest of the specification are by weight, and all materials are commercially available, for example from Sigma-Aldrich Chemical Company, Milwaukee, WI, USA, or known to those skilled in the art, unless otherwise stated or apparent.

The following abbreviations are used in this section: g=grams, lb=pounds, cm=centimeters, min=minutes, h=hours, N=newtons, dNm=decinewton meters, MV=Mooney viscosity, °C=degrees Celsius, °F=degrees Fahrenheit, PSI=pounds per square inch, MPa=megapascals, mol=moles. Abbreviations for materials used in this section, as well as descriptions of the materials, are provided in Table 1.

**Table 1.**

| Material | Details |
|---|---|
| Fluoropolymer A | Copolymer of 65.7 mol % TFE, 33.0 mol % PMVE, and 1.3 mol % MV5CN, made via aqueous emulsion polymerization and coagulated with an aqueous 1.3% MgCl₂ solution, washed with deionized water and oven dried at 115°C for 16 h |
| Fluoropolymer B | Latex blend of an amorphous fluorinated copolymer of 65.7 mol % TFE, 33.0 mol % PMVE, and 1.3 mol % MV5CN and a thermoplastic copolymer of 98.5 mol% TFE and 1.5 mol % PPVE (having a melting point of 308°C) blended to achieve an 80/20 ratio by weight of amorphous fluoropolymer to thermoplastic, coagulated with an aqueous 1.3% MgCl₂ solution, washed with deionized water and oven dried at 115°C for 16 h |
| Catalyst | Tetrabutylphosphonium 2-p-toluyl-1,1,1,3,3,3-hexafluoroisopropanoate, can be prepared as described for "TBPTHI2" in U.S. Pat. No. 8,906,821 |
| BF6 Phth | bis(3,4-dicyanophenyl) ether of 4,4'-(hexafluoroisopropylidene)diphenol, can be prepared as described below in Preparatory Example 1 |
| Diphenyl Phth | 4,4'-bis(3,4-dicyanophenoxy)biphenyl, can be prepared as described below in Preparatory Example 2 |
| Resorc Phth | bis(3,4-dicyanophenyl) ether of resorcinol, can be prepared as described below in Preparatory Example 3 |
| BPT Phth | bis(3,4-dicyanophenyl) ether of bisphenol T, can be prepared as described below in Preparatory Example 4 |

### Preparative Example 1: BF6 Phth

To a three necked 500 mL reaction flask was added 50.0 g (0.289 mol) of 4-nitrophthalonitrile, 48.55 g (0.144 mol) of 4,4'- (hexafluoroisopropylidene)diphenol, 49.9 g (0.361 mol) of anhydrous K₂CO₃ and 225 g of dry DMSO. The reaction solution was heated to 70° C and mechanically stirred with sparging nitrogen for 3.5 h. Stirring was ceased, and the reaction salts settled to the bottom of the vessel. Some of the reaction product had begun to crystalize from the reaction liquid. The reaction solution liquid and product were decanted from the reaction salts into a stirring chilled mixture of 250 g of 80/20 methanol/water by mass. Additional product crystallized from the DMSO/methanol/water solution. The reaction salts were washed with 25 g of DMSO, and the wash DMSO decanted into the stirring DMSO/methanol/water solution. The product solids were collected on a Büchner funnel and washed with methanol, water, and methanol. The solids were collected in an aluminum pan and were dried of methanol and water in a convection oven at 140 °C for 2 h. The solids were further heated to 250 °C for 15 min which melted the solids and drove off residual DMSO. The product melt was removed from the oven and allowed to cool to ambient temperature. The product, 79.0 g (92.9% yield), had a melt temperature of 231-232 °C by differential scanning calorimetry measurement (DSC Q 2000, TA Instruments, New Castle, DE). The product was identified as bis(3,4-dicyanophenyl) ether of 4,4'-(hexafluoroisopropylidene)diphenol by infrared analysis and NMR and had a purity of >99%.

### Preparative Example 2: Diphenyl Phth

4-nitrophthalonitrile (48.8 g) and 4,4'-biphenol (26.24 g) were added to a two neck 500 mL round bottom flask. 200 g of DMF was added to the flask. The 4-nitrophthalonitrile and the 4,4'-biphenol were dissolved in the DMF by stirring with an egg-shaped stir bar on a magnetic stir plate. DBU (53.6 g) was added in one addition. The flask necks were sealed with rubber septums with a thermoprobe inserted through one rubber septum. The solution was stirred with an egg-shaped stir bar and heated to 70 °C with a heating mantle. The flask solution was held at 70°C for 2 h. The solution was allowed to cool to ambient temperature. The product was precipitated by addition to 500 mL of stirring methanol. The precipitate was collected on a Büchner funnel with #4 Whatman filter paper with suction and washed with 200 mL of methanol, 200 mL of water, and 200 mL of methanol. The collected solids were air dried overnight, and further dried in a vacuum oven at 180 °C the next day for 1 hour. The solids, 59.1g (95.6% yield), had a melt temperature of 236°C as measured by differential scanning calorimetry, and were identified as 4,4'-bis(3,4-dicyanophenoxy)biphenyl by infrared and NMR analysis.

### Preparative Example 3: Resorc Phth

To a three necked 500 mL reaction flask was added 50.0 g (0.289 mol) of 4-nitrophthalonitrile, 15.90 g (0.144 mol) of resorcinol, 49.9 g (0.361 mol) of anhydrous K₂CO₃, and 175 g of dry DMSO. The reaction solution was heated to 70 °C and mechanically stirred with sparging nitrogen for 3.5 h. Stirring was ceased, and the reaction salts settled to the bottom of the vessel. The reaction solution liquid and product were decanted from the reaction salts into a stirring chilled mixture of 200 g of 80/20 methanol/water by mass. The product crystallized from the DMSO/methanol/water solution. The reaction salts were washed with 25 g of DMSO, and the wash DMSO decanted into the stirring DMSO/methanol/water solution. The product solids were collected on a Büchner funnel and washed with methanol, water and methanol. The solids were collected in an aluminum pan and were dried of methanol and water in a convection oven at 140 °C for 2 h. The solids were further heated in a vacuum oven to 200 °C for 1 h which melted the solids and stripped off residual DMSO. The product melt was removed from the oven and allowed to cool to ambient temperature. The product, 47.3 g (90.4% yield), had a melt temperature of 185 °C by differential scanning calorimetry measurement on a TA Instruments DSC Q 2000. The product was identified as bis(3,4-dicyanophenyl) ether of resorcinol infrared analysis and NMR and had a purity of >99%.

### Preparative Example 4: BPT Phth

To a three necked 500 mL reaction flask was added 50.0 g (0.289 mol) of 4-nitrophthalonitrile, 31.52 g (0.144 mol) of bisphenol T, 49.9 g (0.361 mol) of anhydrous K₂CO₃, and 225 g of dry DMSO. The reaction solution was heated to 70 °C and mechanically stirred with sparging nitrogen for 3.5 h. Stirring was ceased, and the reaction salts settled to the bottom of the vessel. The reaction solution liquid and product were decanted from the reaction salts into a stirring chilled mixture of 250 g of 80/20 methanol/water by mass. The product crystallized from the DMSO/methanol/water solution. The reaction salts were washed with 25 g of DMSO, and the wash DMSO decanted into the stirring DMSO/methanol/water solution. The product solids were collected on a Büchner funnel and washed with methanol, water and methanol. The solids were collected in an aluminum pan and were dried of methanol and water in a convection oven at 140 °C for 2 h. The solids were further heated in a vacuum oven to 200 °C for 1 h which melted the solids and stripped off residual DMSO. The product melt was removed from the oven and allowed to cool to ambient. The product, 60.6 g (89.2% yield), had a melt temperature of 178 °C by differential scanning calorimetry measurement on a TA Instruments DSC Q 2000. The product was identified as bis(3,4-dicyanophenyl) ether of bisphenol T by infrared analysis and NMR and had a purity of >99%.

Samples were made in 100 g polymer batches by compounding the amounts of materials as listed in Table 1 on a two-roll mill. For example, 0.7 g of Catalyst was added to 100 g of Fluoropolymer A in CE-1.

Cure rheology tests were carried out using uncured, compounded samples using a rheometer marketed under the trade designation PPA 2000 by Alpha technologies, Akron, OH, in accordance with ASTM D 5289-93a at 177 °C, no pre-heat, 15 minute elapsed time, and a 0.5 degree arc. Both the minimum torque (M_{L}) and highest torque attained during a specified period of time when no plateau or maximum torque (M_{H}) was obtained were measured. Also measured were the time for the torque to reach a value equal to M_{L} + 0.5(M_{H} - M_{L}), (t'50), the time for the torque to reach M_{L} + 0.9(M_{H} - M_{L}), and the value of the tan d curve at the maximum torque, (tan δ M_{H}). Results are reported in Tables 3.

O-rings (214, AMS AS568) were molded at 177 °C for 15 min. The press cured O-rings were post-cured at one of two conditions: (A) 230 °C for 16 h or (B) a ramp from room temperature to 150°C over 2 h with a 7 h hold at 150°C followed by a ramp to 300° C over 2 h with a hold at 300°C for 2 h, and finally a ramp to 320°C over 15 min with a hold for 15 min. The post cured O-rings were tested for compression set resistance for 70 h at 300 °C, 325 °C, and 335 °C in accordance with ASTM D 395-03 Method B and ASTM D 1414-94 with 25 % initial deflection. Results are reported as percentages in Table 4.

**Table 2.**

| | Sample | | | | | |
|---|---|---|---|---|---|---|
| | CE-1 | EX-1 | EX-2 | EX-3 | EX-4 | EX-5 |
| Fluoropolymer A (g) | 100 | 100 | 100 | 100 | 100 | - |
| Fluoropolymer B (g) | - | - | - | - | - | 100 |
| Catalyst (g) | 0.7 | 0.7 | 0.7 | 0.7 | 0.7 | 0.7 |
| BF6 Phth (g) | - | 1 | - | - | - | - |
| Diphenyl Phth (g) | - | - | 1 | - | - | 1 |
| Resorc Phth (g) | - | - | - | 1 | - | - |
| BPT Phth (g) | - | - | - | - | 1 | - |

**Table 3.**

| | Sample | | | | | |
|---|---|---|---|---|---|---|
| | CE-1 | EX-1 | EX-2 | EX-3 | EX-4 | EX-5 |
| M_{L} (dN•m) | 1.4 | 2.0 | 1.9 | 1.9 | 2.0 | 3.1 |
| M_{H} (dN•m) | 4.6 | 6.7 | 7.5 | 6.4 | 7.9 | 7.6 |
| t'50 | 4.7 | 2.6 | 2.6 | 2.3 | 2.2 | 2.3 |
| t'90 | 11.0 | 8.1 | 7.9 | 6.8 | 6.8 | 6.9 |
| Tan δ M_{H} | 0.199 | 0.099 | 0.111 | 0.098 | 0.095 | 0.171 |

**Table 4.**

| Post cure | Testing Conditions | Compression Set Resistance | | | | | |
|---|---|---|---|---|---|---|---|
| | | CE-1 | EX-1 | EX-2 | EX-3 | EX-4 | EX-5 |
| A | 70 h at 300°C | 64 | 45 | | | | |
| A | 70 h at 325°C | 85 | 54 | | | | |
| B | 70 h at 300°C | 24 | 29 | 25 | 26 | 21 | 55 |
| B | 70 h at 325°C | 58 | 34 | | | | |
| B | 70 h at 335°C | Melted | 66 | 48 | 51 | 49 | 66 |

### FT-IR Analysis

CE-1 and EX-2 were analyzed by Fourier Transform-Infrared (FT-IR) spectroscopy (Perkin Elmer FT-IR Frontier spectrometer, Waltham, MA) in transmission. A sample of uncured compound (6 to 8g) was placed into the PPA 2000 rheometer and cured for 15 minutes a 177°C to form a press cured disk. The disk was then post cured following condition (B) as described above for the O-rings. An initial IR spectrum was obtained for the post cured disk. Then the disk was placed on a stainless-steel plate and subjected to heat aging at 335°C for 70 hours. The heat-aged sample was allowed to cool for 30 minutes, then an IR spectrum was obtained.

Data analysis of the absorbance spectra was performed using Perkin Elmer Spectrum IR software. For the peaks of interest, a baseline was first established. For the C-F overtone, the baseline was established from 2210-2750 cm⁻¹, and the area of this peak was determined by using endpoints of 2210 cm⁻¹ and 2700 cm⁻¹. Baseline from the triazine peak was determined by endpoints of 1525 cm⁻¹ and 1575 cm⁻¹ and the area of this peak was determined by using endpoints of 1525 cm⁻¹ and 1575 cm⁻¹. Results are listed in Table 5.

**Table 5.**

| Sample | integrated peak area (cm⁻¹) | | | |
|---|---|---|---|---|
| | Initial | | Heat Aged | |
| | C-F Overtone | Triazine Peak | C-F Overtone | Triazine Peak |
| CE-1 | 308 | 10 | 117 | 1 |
| EX-2 | 325 | 8 | 322 | 10 |

CE-1 and EX-2 were prepared at the same thickness and as observed in Table 5, they have a similar initial integrated peak area for the C-F overtone. CE-1 and EX-2 also have a similar initial integrated peak area for the triazine peak. However, upon heat aging, CE-1 appears to show a decrease in both the C-F overtone and the triazine peak areas whereas the integrated peak areas for EX-2 appear relatively unchanged, indicating retention of crosslinking sites which may explain the unexpectedly good compression set data for the o-ring samples of the present disclosure.

This invention should not be restricted to the embodiments that are set forth in this application for illustrative purposes.

## Claims

1. A composition comprising
(i) an uncured highly fluorinated amorphous polymer comprising nitrile groups, wherein at least 80 % of the hydrogen atoms of the polymer backbone of the highly fluorinated amorphous polymer have been replaced with fluorine atoms;
(ii) a catalyst comprising an organo onium cation and an anion of Formula I: 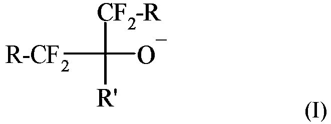 wherein each R and R' is independently is H, halo, alkyl, aryl, aralkyl, or cycloalkyl, and which also may be halogenated, fluorinated, or perfluorinated, optionally wherein each R or R' group independently may contain one or more heteroatom(s); wherein two or more of R and R' groups may together form a ring with the proviso that R' cannot be halo; and
(iii) an additive comprising a compound of Formula II 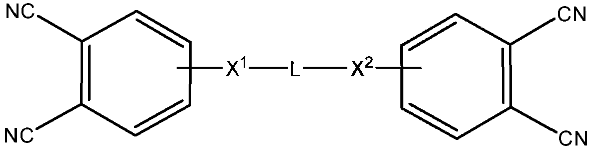 wherein X¹ and X² are independently selected from O or S, and L comprises at least one multivalent six-membered arene group.

2. The composition of claim 1 wherein each R is F and R' is selected from H, phenyl, methoxyphenyl, toluyl, phenoxy, fluorophenyl, trifluoromethylphenyl, and CF₃.

3. The composition of any one of the previous claims, wherein the catalyst comprises at least one of tetra-alkylammonium 2-phenyl-1,1,1,3,3,3 hexafluoroisopropanolate, tetra-alkylammonium 1,1,1,3,3,3 hexafluoroisopropanolate, tetrabutylphosphonium 2-phenyl-1,1,1,3,3,3 hexafluoroisopropanolate, tetrabutylphosphonium 1,1,1,3,3,3 hexafluoroisopropanolate, tetrabutylphosphonium 2-methoxyphenyl-1,1,1,3,3,3 hexafluoroisopropanolate, or tetrabutylphosphonium 2-p-toluyl-1,1,1,3,3,3 hexafluoroisopropanolate.

4. The composition of any one of the preceding claims, wherein at least 95 % of the hydrogen atoms of the polymer backbone of the uncured highly fluorinated amorphous polymer have been replaced with fluorine atoms.

5. The composition of any one of the preceding claims, wherein the uncured highly fluorinated amorphous polymer comprises repeating units derived from a perfluorinated monomer comprising a nitrile group, tetrafluoroethylene (TFE), and at least one comonomer selected from the group consisting of a perfluoroalkyl vinyl ether (PAVE) and a perfluoroalkyl allyl ether (PAAE).

6. The composition of any one of the preceding claims, wherein the uncured highly fluorinated amorphous polymer comprises at least 1 mole % and no greater than 5 mole % of nitrile groups.

7. The composition of any one of the preceding claims, wherein the composition comprises at least 0.05 to at most 5 weight % of the catalyst.

8. The composition of any one of the preceding claims, wherein the composition comprises at least 0.05 to at most 9 weight % of the compound according to Formula (II).

9. The composition of any one of the preceding claims, wherein L is a divalent, trivalent or tetravalent group.

10. The composition of any one of the preceding claims, wherein L is 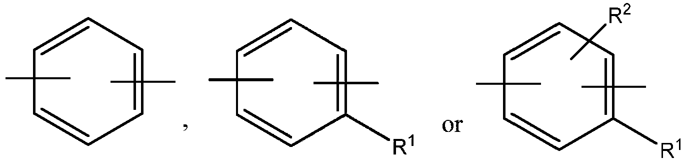 wherein R¹ is selected from the group consisting of a methyl, methoxy, ethyl, and ethoxy group and R² is selected from the group consisting of a methyl, methoxy, ethyl, and ethoxy group.

11. The composition of any one of claims 1-10, wherein L is 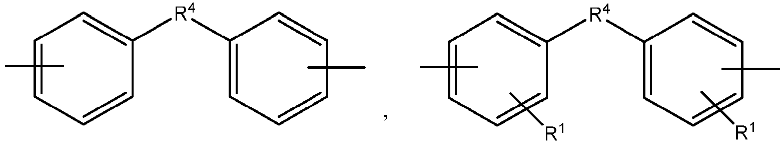 and 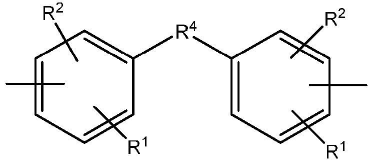 wherein R⁴ is selected from the group consisting of: bond, -S-, -O-, -C(CF₃)₂-, -C(CH₃)₂-, - CH₂-, -SO₂-, -C(=O)-, and -C(CH₃)₂-C₆H₄-C(CH₃)₂-; each R¹ is independently selected the group consisting of a methyl, methoxy, ethyl, and ethoxy group and each R² is independently selected from the group consisting of a methyl, methoxy, ethyl, and ethoxy group.

12. The composition of any one of the preceding claims, wherein the composition further comprises a filler, wherein the filler is at least one of carbon black, or polytetrafluoroethylene.

13. An article comprising a cured elastomer derived from the composition according to any one of claims 1 to 12.

14. A method of make a highly fluorinated elastomer, the method comprising:
(a) combining (i) a highly fluorinated amorphous polymer comprising nitrile groups, wherein at least 80 % of the hydrogen atoms of the polymer backbone of the highly fluorinated amorphous polymer have been replaced with fluorine atoms; (ii) a catalyst comprising an organo onium cation and an anion of Formula I: 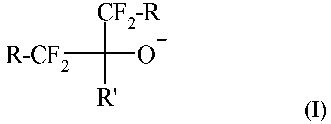 wherein each R and R' is independently is H, halo, alkyl, aryl, aralkyl, or cycloalkyl, and which also may be halogenated, fluorinated, or perfluorinated, optionally wherein each R or R' group independently may contain one or more heteroatom(s); wherein two or more of R and R' groups may together form a ring with the proviso that R' cannot be halo; and (iii) an additive comprising a compound of Formula II 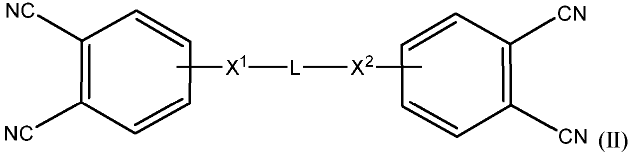 wherein X¹ and X² are independently selected from O or S, and L comprises at least one multivalent six-membered arene group to form a mixture.

15. The use of a catalyst and an additive to cure a highly fluorinated amorphous polymer comprising nitrile groups, wherein at least 80 % of the hydrogen atoms of the polymer backbone of the highly fluorinated amorphous polymer have been replaced with fluorine atoms; the catalyst comprises an organo onium cation and an anion of Formula I: 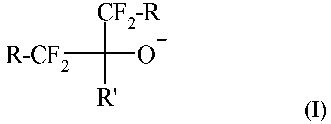
wherein each R and R' is independently is H, halo, alkyl, aryl, aralkyl, or cycloalkyl, and
which also may be halogenated, fluorinated, or perfluorinated, optionally wherein each R or R' group independently may contain one or more heteroatom(s); wherein two or more of R and R' groups may together form a ring with the proviso that R' cannot be halo; and
the additive comprises a compound of Formula II 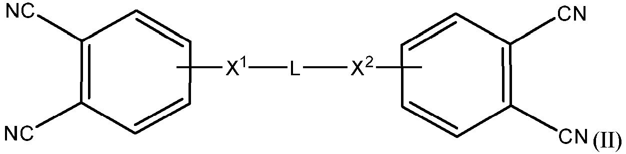 wherein X¹ and X² are independently selected from O or S, and L comprises at least one multivalent six-membered arene group.

## Patentansprüche

1. Eine Zusammensetzung, umfassend
(i) ein ungehärtetes hochfluoriertes amorphes Polymer, umfassend Nitrilgruppen, wobei mindestens 80 % der Wasserstoffatome des Polymer-Grundgerüsts des hochfluorierten amorphen Polymers durch Fluoratome ersetzt wurden;
(ii) einen Katalysator, umfassend ein Organooniumkation und ein Anion der Formel I: 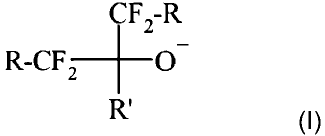 wobei jedes R und R' unabhängig H, Halogen, Alkyl, Aryl, Aralkyl oder Cycloalkyl ist und die ebenso halogeniert, fluoriert oder perfluoriert sein können, optional wobei jede R- oder R'-Gruppe unabhängig ein oder mehrere Heteroatome enthalten kann; wobei zwei oder mehr der R- und R'-Gruppen zusammen einen Ring mit der Maßgabe ausbilden können, dass R' nicht Halogen sein kann; und
(iii) ein Additiv, umfassend eine Verbindung der Formel II 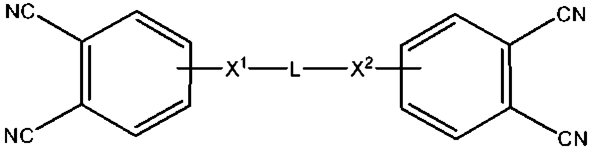 wobei X¹ und X² unabhängig aus O oder S ausgewählt sind, und L mindestens eine mehrwertige sechsgliedrige Arengruppe umfasst.

2. Die Zusammensetzung nach Anspruch 1, wobei jedes R F ist und R' aus H, Phenyl, Methoxyphenyl, Toluyl, Phenoxy, Fluorphenyl, Trifluormethylphenyl und CF₃ ausgewählt ist.

3. Die Zusammensetzung nach einem der vorstehenden Ansprüche, wobei der Katalysator mindestens eines von Tetra-alkylammonium-2-phenyl-1,1,1,3,3,3-hexafluoroisopropanolat, Tetra-alkylammonium-1,1,1,3,3,3-hexafluoroisopropanolat, Tetrabutylphosphonium-2-phenyl-1,1,1,3,3,3-hexafluoroisopropanolat, Tetrabutylphosphonium-1,1,1,3,3,3-hexafluoroisopropanolat, Tetrabutylphosphonium-2-methoxyphenyl-1,1,1,3,3,3-hexafluoroisopropanolat oder Tetrabutylphosphonium-2-p-toluyl-1,1,1,3,3,3-hexafluoroisopropanolat umfasst.

4. Die Zusammensetzung nach einem der vorstehenden Ansprüche, wobei mindestens 95 % der Wasserstoffatome des Polymer-Grundgerüsts des ungehärteten hochfluorierten amorphen Polymers durch Fluoratome ersetzt wurden.

5. Die Zusammensetzung nach einem der vorstehenden Ansprüche, wobei das ungehärtete hochfluorierte amorphe Polymer Wiederholungseinheiten umfasst, die abgeleitet sind von einem perfluorierten Monomer, umfassend eine Nitrilgruppe, Tetrafluorethylen (TFE) und mindestens einem Comonomer ausgewählt aus der Gruppe, bestehend aus einem Perfluoralkylvinylether (PAVE) und einem Perfluoralkylallylether (PAAE).

6. Die Zusammensetzung nach einem der vorstehenden Ansprüche, wobei das ungehärtete hochfluorierte amorphe Polymer mindestens 1 Mol-% und nicht mehr als 5 Mol-% Nitrilgruppen umfasst.

7. Die Zusammensetzung nach einem der vorstehenden Ansprüche, wobei die Zusammensetzung zu mindestens 0,05 bis höchstens 5 Gew.-% den Katalysator umfasst.

8. Die Zusammensetzung nach einem der vorstehenden Ansprüche, wobei die Zusammensetzung zu mindestens 0,05 bis höchstens 9 Gew.-% die Verbindung gemäß Formel (II) umfasst.

9. Die Zusammensetzung nach einem der vorstehenden Ansprüche, wobei L eine zweiwertige, dreiwertige oder vierwertige Gruppe ist.

10. Die Zusammensetzung nach einem der vorstehenden Ansprüche, wobei L ist 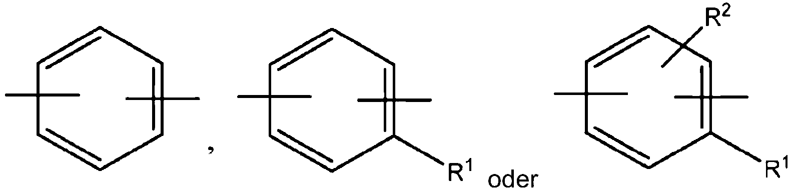 wobei R¹ aus der Gruppe ausgewählt ist, bestehend aus einer Methyl-, Methoxy-, Ethyl- und Ethoxygruppe, und R² aus der Gruppe ausgewählt ist, bestehend aus einer Methyl-, Methoxy-, Ethyl- und Ethoxygruppe.

11. Die Zusammensetzung nach einem der Ansprüche 1 bis 10, wobei L ist 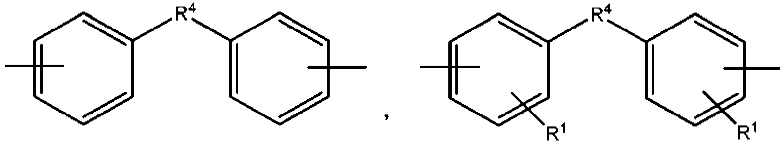 und 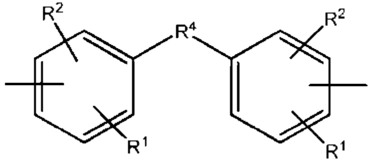 wobei R⁴ aus der Gruppe ausgewählt ist, bestehend aus Bindung, -S-, -O-, -C(CF₃)₂-, -C(CH₃)₂-, - CH₂-, -SO₂-, -C(=O)- und -C(CH₃)₂-C₆H₄-C(CH₃)₂-; jedes R¹ unabhängig aus der Gruppe ausgewählt ist, bestehend aus einer Methyl-, Methoxy-, Ethyl- und Ethoxygruppe und jedes R² unabhängig aus der Gruppe ausgewählt ist, bestehend aus einer Methyl-, Methoxy-, Ethyl- und Ethoxygruppe.

12. Die Zusammensetzung nach einem der vorstehenden Ansprüche, wobei die Zusammensetzung ferner einen Füllstoff umfasst, wobei der Füllstoff mindestens eines von Ruß oder Polytetrafluorethylen ist.

13. Ein Artikel, umfassend ein gehärtetes Elastomer, das aus der Zusammensetzung nach einem der Ansprüche 1 bis 12 abgeleitet ist.

14. Ein Verfahren zum Herstellen eines hochfluorierten Elastomers, das Verfahren umfassend:
(a) Kombinieren von (i) einem hochfluorierten amorphen Polymer, umfassend Nitrilgruppen, wobei mindestens 80 % der Wasserstoffatome des Polymer-Grundgerüsts des hochfluorierten amorphen Polymers durch Fluoratome ersetzt wurden; (ii) einem Katalysator, umfassend ein Organooniumkation und ein Anion der Formel I: 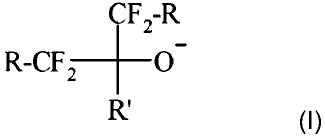 wobei jedes R und R' unabhängig H, Halogen, Alkyl, Aryl, Aralkyl oder Cycloalkyl ist und die ebenso halogeniert, fluoriert oder perfluoriert sein können, optional wobei jede R- oder R'-Gruppe unabhängig ein oder mehrere Heteroatome enthalten kann; wobei zwei oder mehr der R- und R'-Gruppen zusammen einen Ring mit der Maßgabe ausbilden können, dass R' nicht Halogen sein kann; und (iii) einem Additiv, umfassend eine Verbindung der Formel II 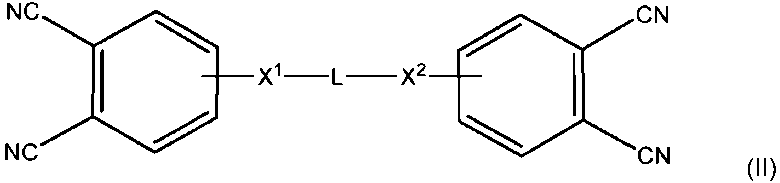 wobei X¹ und X² unabhängig aus O oder S ausgewählt sind, und L mindestens eine mehrwertige sechsgliedrige Arengruppe umfasst, um eine Mischung auszubilden.

15. Die Verwendung eines Katalysators und eines Additivs, um ein hochfluoriertes amorphes Polymer auszuhärten, umfassend Nitrilgruppen, wobei mindestens 80 % der Wasserstoffatome des Polymer-Grundgerüsts des hochfluorierten amorphen Polymers durch Fluoratome ersetzt wurden; wobei der Katalysator ein Organooniumkation und ein Anion der Formel I umfasst: 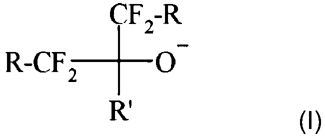
wobei jedes R und R' unabhängig H, Halogen, Alkyl, Aryl, Aralkyl oder Cycloalkyl ist und die ebenso halogeniert, fluoriert oder perfluoriert sein können, optional wobei jede R- oder R'-Gruppe unabhängig ein oder mehrere Heteroatome enthalten kann; wobei zwei oder mehr der R- und R'-Gruppen zusammen einen Ring mit der Maßgabe ausbilden können, dass R' nicht Halogen sein kann; und
das Additiv eine Verbindung der Formel II umfasst 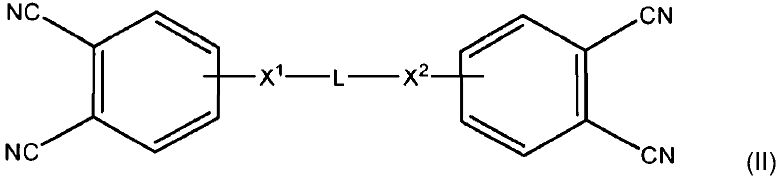
wobei X¹ und X² unabhängig aus O oder S ausgewählt sind, und L mindestens eine mehrwertige sechsgliedrige Arengruppe umfasst.

## Revendications

1. Composition comprenant
(i) un polymère amorphe hautement fluoré non durci comprenant des groupes nitrile, dans laquelle au moins 80 % des atomes d'hydrogène du squelette polymère du polymère amorphe hautement fluoré ont été remplacés par des atomes de fluor ;
(ii) un catalyseur comprenant un cation organo-onium et un anion de formule I : 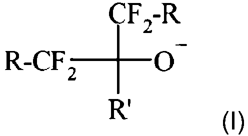 dans laquelle chaque R et R' est indépendamment H, halo, alkyle, aryle, aralkyle, ou cycloalkyle, et qui peut également être halogéné, fluoré, ou perfluoré, éventuellement, dans laquelle chaque groupe R ou R' peut indépendamment contenir un ou plusieurs hétéroatomes ; dans laquelle deux groupes R et R' ou plus peuvent former ensemble un cycle à condition que R' ne puisse pas être halo ; et
(iii) un additif comprenant un composé de Formule II 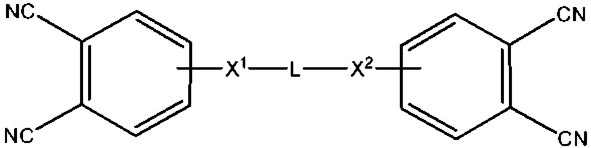 dans laquelle X¹ et X² sont indépendamment choisis parmi O ou S, et L comprend au moins un groupe arène multivalent à six chaînons.

2. Composition selon la revendication 1 dans laquelle chaque R est F et R' est choisi parmi H, phényle, méthoxyphényle, toluyle, phénoxy, fluorophényle, trifluorométhylphényle, et CF₃.

3. Composition selon l'une quelconque des revendications précédentes, dans laquelle le catalyseur comprend au moins l'un parmi tétra-alkylammonium 2-phényl-1,1,1,3,3,3-hexafluoroisopropanolate, tétra-alkylammonium 1,1,1,3,3,3-hexafluoroisopropanolate, tétrabutylphosphonium 2-phényl-1,1,1,3,3,3-hexafluoroisopropanolate, tétrabutylphosphonium 1,1,1,3,3,3-hexafluoroisopropanolate, 2-méthoxyphényl-1,1,1,3,3,3-hexafluoroisopropanolate de tétrabutylphosphonium, ou tétrabutylphosphonium 2-p-toluyl-1,1,1,3,3,3 hexafluoroisopropanolate.

4. Composition selon l'une quelconque des revendications précédentes, dans laquelle au moins 95 % des atomes d'hydrogène du squelette polymère du polymère amorphe hautement fluoré non durci ont été remplacés par des atomes de fluor.

5. Composition selon l'une quelconque des revendications précédentes, dans laquelle le polymère amorphe hautement fluoré non durci comprend des unités répétitives dérivées d'un monomère perfluoré comprenant un groupe nitrile, tétrafluoroéthylène (TFE), et au moins un comonomère choisi dans le groupe constitué d'un éther perfluoroalkylvinylique (PAVE) et d'un éther allyle perfluoroalkyle (PAAE).

6. Composition selon l'une quelconque des revendications précédentes, dans laquelle le polymère amorphe hautement fluoré non durci comprend au moins 1 % en mole et pas plus de 5 % en mole de groupes nitrile.

7. Composition selon l'une quelconque des revendications précédentes, dans laquelle la composition comprend au moins 0,05 à au plus 5 % en poids du catalyseur.

8. Composition selon l'une quelconque des revendications précédentes, dans laquelle la composition comprend au moins 0,05 à au plus 9 % en poids du composé selon la Formule (II).

9. Composition selon l'une quelconque des revendications précédentes, dans laquelle L est un groupe divalent, trivalent ou tétravalent.

10. Composition selon l'une quelconque des revendications précédentes, dans laquelle L est 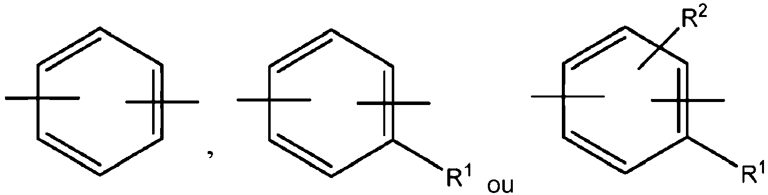 dans laquelle R¹ est choisi dans le groupe constitué d'un groupe méthyle, méthoxy, éthyle, et éthoxy et R² est choisi dans le groupe constitué d'un groupe méthyle, méthoxy, éthyle, et éthoxy.

11. Composition selon l'une quelconque des revendications 1 à 10, dans laquelle L est 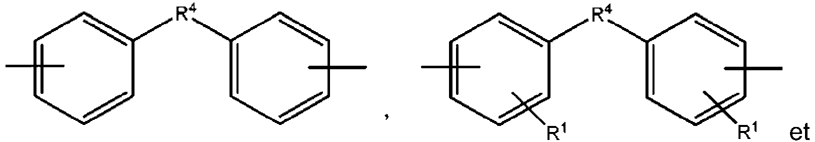 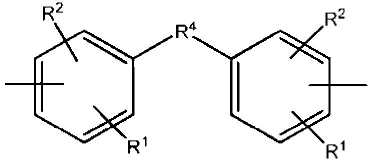 dans laquelle R⁴ est choisi dans le groupe constitué de : liaison, -S-, -O-, - C(CF₃)₂-, -C(CH₃)₂-, - CH₂-, -SO₂-, -C(=O)-, et -C(CH₃)₂-C₆H₄-C(CH₃)₂- ; chaque R¹ est choisi indépendamment dans le groupe constitué d'un groupe méthyle, méthoxy, éthyle, et éthoxy et chaque R² est choisi indépendamment dans le groupe constitué d'un groupe méthyle, méthoxy, éthyle, et éthoxy.

12. Composition selon l'une quelconque des revendications précédentes, dans laquelle la composition comprend en outre une charge, dans laquelle la charge est au moins l'un parmi le noir de carbone, ou le polytétrafluoroéthylène.

13. Article comprenant un élastomère durci obtenu à partir de la composition selon l'une quelconque des revendications 1 à 12.

14. Procédé de fabrication d'un élastomère hautement fluoré, le procédé comprenant :
(a) la combinaison (i) d'un polymère amorphe hautement fluoré comprenant des groupes nitrile, dans lequel au moins 80 % des atomes d'hydrogène du squelette polymère du polymère amorphe hautement fluoré ont été remplacés par des atomes de fluor ; (ii) d'un catalyseur comprenant un cation et un anion de Formule I : 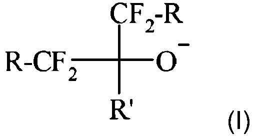 dans laquelle chaque R et R' est indépendamment H, halo, alkyle, aryle, aralkyle, ou cycloalkyle, et qui peut également être halogéné, fluoré, ou perfluoré, éventuellement, dans laquelle chaque groupe R ou R' peut indépendamment contenir un ou plusieurs hétéroatomes ; dans laquelle deux groupes R et R' ou plus peuvent former ensemble un cycle à condition que R' ne puisse pas être halo ; et (iii) un additif comprenant un composé de Formule II 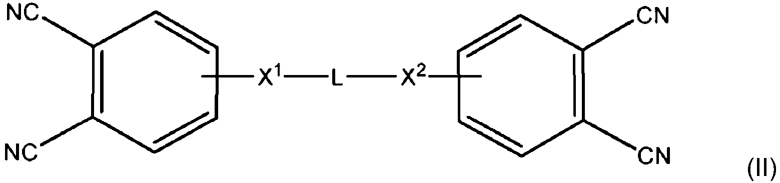 dans laquelle X¹ et X² sont indépendamment choisis parmi O ou S, et L comprend au moins un groupe arène multivalent à six chaînons pour former un mélange.

15. Utilisation d'un catalyseur et d'un additif permettant de durcir un polymère amorphe hautement fluoré comprenant des groupes nitrile, dans lequel au moins 80 % des atomes d'hydrogène du squelette polymère du polymère amorphe hautement fluoré ont été remplacés par des atomes de fluor : le catalyseur comprend un cation organo-onium et un anion de formule I : 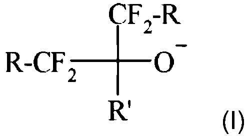
dans laquelle chaque R et R' est indépendamment H, halo, alkyle, aryle, aralkyle, ou cycloalkyle, et qui peut également être halogéné, fluoré, ou perfluoré, éventuellement, dans laquelle chaque groupe R ou R' peut indépendamment contenir un ou plusieurs hétéroatomes ; dans laquelle deux groupes R et R' ou plus peuvent former ensemble un cycle à condition que R' ne puisse pas être halo ; et
l'additif comprend un composé de Formule II 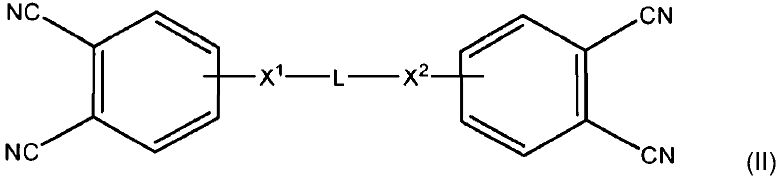
dans laquelle X¹ et X² sont indépendamment choisis parmi O ou S, et L comprend au moins un groupe arène multivalent à six chaînons.
